# EUROPÄISCHE PATENTSCHRIFT

(11) **EP 1 159 998 B1**
(45) Veröffentlichungstag und Bekanntmachung des Hinweises auf die Patenterteilung: **05.07.2006**
(21) Anmeldenummer: 01112021.9
(22) Anmeldetag: 23.05.2001
(51) Int. Cl.: B01D 35/153

(54) **Flüssigkeitsfilter**
Liquid filter
Filtre à liquide

(30) Priorität: 27.05.2000 DE 10026451
(43) Veröffentlichungstag der Anmeldung: 05.12.2001
(73) Patentinhaber: Mann + Hummel GmbH, 71638 Ludwigsburg (DE)
(72) Erfinder: Jainek, Herbert, 74074 Heilbronn (DE)
(74) Vertreter: Voth, Gerhard

(56) Entgegenhaltungen:
- EP-A- 0 681 094
- WO-A-97/28880
- GB-A- 2 287 199

## Beschreibung

Die Erfindung betrifft einen Flüssigkeitsfilter bestehend aus einem Gehäuse, einem gehäuseabschließenden Deckel, einem in dem Gehäuse angeordnetem Filterelement und einem mit dem Deckel verbundenen Stützkörper für das Filterelement.

### Stand der Technik

Aus dem DE-U-29-602 330 ist ein Flüssigkeitsfilter bekannt. Solche Flüssigkeitsfilter weisen einen Ablauf auf, der während des Filterbetriebs verschlossen werden muß. Bei dem bekannten Fluid-Filter ist ein entfernbarer Filtereinsatz vorgesehen. An der Ablauföffnung ist ein federbelastetes Verschlußelement angeordnet, welches von dem Filtereinsatz gegen die Federwirkung in einer die Ablauföffnung verschließenden Verschlußstellung gehalten ist. Bei gelockertem oder entfernten Filtereinsatz gibt dieses federbelastetes Verschlußelement die Ablauföffnung frei. Das Verschlußelement ist beispielsweise eine Blattfeder, welche die Öffnung unmittelbar oder über eine Dichtung verschließt.

Ein Nachteil dieser Anordnung ist darin zu sehen, daß ein zuverlässiges Verschließen der Ablauföffnung durch das federbelastete Verschlußelement nicht gewährleistet ist. Bekanntlich weisen die verwendeten Filtereinsätze eine gewisse Toleranz hinsichtlich ihres Durchmessers oder ihrer Länge auf. Diese Toleranzen führen dazu, daß der Filtereinsatz das Verschlußelement mit unterschiedlicher Kraft auf die Ablauföffnung andrückt. Sehr starke Toleranzen des Filterelements können unter Umständen sogar dazu führen, daß trotz eingebautem Filterelement ein Verschließen der Ablauföffnung nicht erfolgt. Dies führt dazu, daß im Betrieb ungehindert Öl bzw. Flüssigkeit über diese Ablauföffnung abfließen kann und damit ein wirksames Filtern der Flüssigkeit nicht gewährleistet ist.
Ein weiterer Flüssigkeitsfilter wird in EP-A-0681094 beschrieben.

Der Erfindung liegt die Aufgabe zugrunde, die genannten Nachteile zu vermeiden und ein Flüssigkeitsfilter zu schaffen, welcher toleranzunabhängig die Ablauföffnung während dem Normalbetrieb verschließt und während der Wartung oder dem Austausch des Filterelements öffnet. Diese Aufgabe wird durch die Merkmale des unabhängigen Anspruchs gelöst.

### Vorteile der Erfindung

Ein Vorteil der Erfindung liegt darin, daß die Ablauföffnung für die Flüssigkeit nicht von dem Filterelement selbst als Funktionselement verschlossen bzw. geöffnet wird, sondern von dem Stützkörper, welcher im Deckel des Flüssigkeitsfilters angeordnet ist. Dieser Stützkörper hat eine definierte Länge und wird über die Deckelbewegung getätigt. Damit läßt sich eine präzise einzustellende Verschlußkraft definieren.

Gemäß der Erfindung ist das Element, welches die Ablauföffnung verschließt bzw. öffnet eine einseitig eingespannte, aus Federstahl bestehende Blattfeder, deren freies Ende die Ablauföffnung verschließt. Diese Blattfeder wird wie bereits erwähnt durch den Stützkörper betätigt. Die Betätigung erfolgt in einer Ausgestaltung der Erfindung durch eine Schulter oder einen Wulst des Stützkörpers.

Eine alternative Ausgestaltung sieht vor, den Stützkörper selbst mit obiger Blattfeder zu versehen, welche die Ablauföffnung verschließt oder öffnet.

Weiterbildungsgemäß besteht das Filterelement des Flüssigkeitsfilters aus einem konzentrisch aufgebautem, zick-zack-förmig gefaltetem Filterpapier, das an den Stirnflächen Endscheiben aufweist. Dieses Filterelement ist auf den Stützkörper aufschiebbar. Beim Austausch des Filterelements wird der Deckel geöffnet, der Stützkörper gibt über das Federelement die Ablauföffnung frei, das in dem Gehäuse befindliche Öl bzw. die Flüssigkeit kann ablaufen. Nach dem Entfernen des Deckels wird das verbrauchte Filterelement von dem Stützrohr abgezogen und ein neues Filterelement aufgeschoben. Der Deckel wird wieder verschlossen, gleichzeitig verschließt das Stützrohr über das Federelement die Ablauföffnung, so daß neue, zu reinigende Flüssigkeit einströmen kann.

Diese und weitere Merkmale von bevorzugten Weiterbildungen der Erfindung gehen außer aus den Ansprüchen auch aus der Beschreibung und den Zeichnungen hervor.

### Zeichnung

Die Erfindung wird nachfolgend anhand von Ausführungsbeispielen näher erläutert. Es zeigt
- Figur 1: die Schnittdarstellung eines Flüssigkeitsfilters,
- Figur 2: eine Draufsicht auf die Ablauf- bzw. Zulauföffnungen.

### Beschreibung der Ausführungsbeispiele

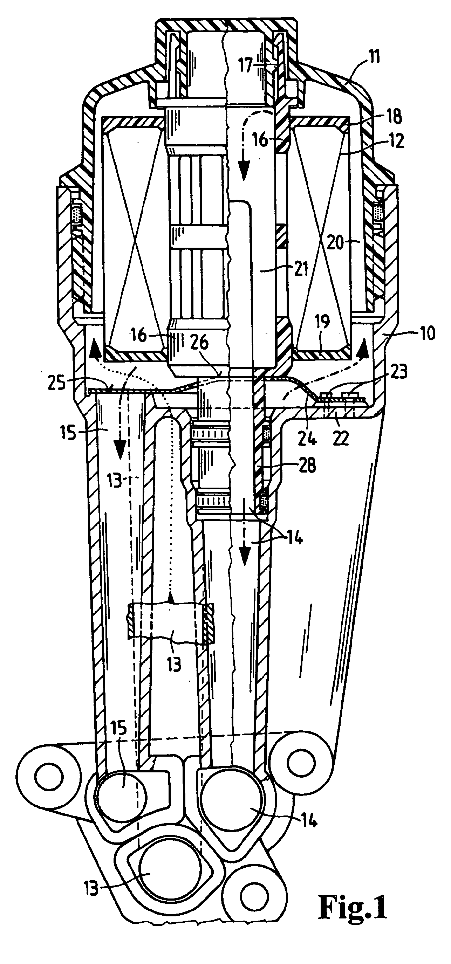

In Figur 1 ist ein Flüssigkeitsfilter mit einem Gehäuse 10, einem Deckel 11 und einem in dem Gehäuse angeordneten Filterelement 12 gezeigt. Das Gehäuse weist eine Rohflüssigkeitszulauföffnung 13, eine Ablauföffnung 14 für die gereinigte Flüssigkeit sowie eine Ablauföffnung 15, die beim Austausch des Filterelements 12 geöffnet wird und ein Abfließen des in dem Flüssigkeitsfilter befindlichen Öls ermöglicht, auf.

An dem Deckel 11 ist ein Stützkörper 16 vorgesehen. Dieser Stützkörper ist über Rastverbindungen 17 fest mit dem Deckel 11 verbunden. Das Filterelement 12, welches aus zick-zack-förmig gefaltetem Filterpapier besteht und Endscheiben 18, 19 aufweist, ist auf den Stützkörper 16 aufgeschoben und trennt damit die Rohflüssigkeitsseite 20 von der Reinflüssigkeitsseite 21.

An einem Bodenbereich 22 des Gehäuses 10 ist über geeignete Befestigungsmittel 23 ein Federelement 24 befestigt. Das Federelement 24 verschließt die Ablauföffnung 15 in einfacher Weise dadurch, daß dieses auf dem Rand 25 des Bodens aufliegt. Die Zuhaltekraft wird über den Stützkörper 16 erzeugt. Dieser Stützkörper ist im unteren Bereich mit einem Stützrand 26 oder -wulst versehen, an welchem das Federelement 24 anliegt. Beim Öffnen des Deckels 11 wird dieser in axialer Richtung nach oben bewegt. Durch die Verbindung zwischen Deckel 11 und Stützkörper 16 bewegt sich der Stützkörper nach oben und gibt damit dem Federelement 24 die Möglichkeit, sich zu entspannen, d. h. das Federelement bewegt sich ebenfalls nach oben weg und gibt die Ablauföffnung 15 frei, so daß das in dem Gehäuse befindliche Öl abfließen kann.

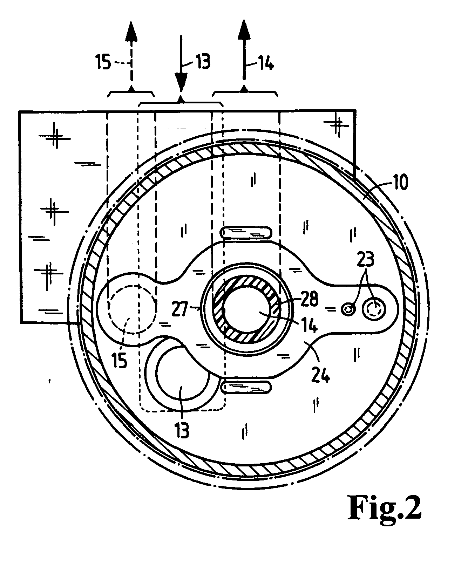

Figur 2 zeigt eine Draufsicht auf das Federelement 24, welches über geeignete Befestigungsmittel 23 am Boden des Gehäuses 10 befestigt ist. Das Federelement 24 ist mit einer Öffnung 27 versehen, durch diese Öffnung wird der Stützkörper 16 mit den Dichtungsansatz 28 hindurch gesteckt.

Die hier dargestellte Ablauföffnung 15 ist unterhalb des Federelements 24 angeordnet, es ist ferner in der Figur 2 die Zulauföffnung 13 für den Zulauf des zu reinigenden Öls zu erkennen.

## Patentansprüche

1. Flüssigkeitsfilter, bestehend aus einem Gehäuse (10) einem gehäuseabschließenden Deckel (11), einem in dem Gehäuse angeordneten Filterelement (12) und einem mit dem Deckel verbundenen Stützkörper (16) für das Filterelement, wobei das Gehäuse eine Zulauföffnung für die zu reinigende Flüssigkeit, eine Ablauföffnung für die gereinigte Flüssigkeit und eine Ablauföffnung (15) für die Flüssigkeit aufweist, die während des Normalbetriebs des Filterelements verschlossen ist und während der Wartung oder dem Austausch des Filterelements geöffnet ist, wobei diese Ablauföffnung mit einem Element verschlossen ist, welches von dem Stützkörper für das Filterelement betätigbar ist, wobei das Element eine einseitig eingespannte, aus Federstahl bestehende Blattfeder (24) ist, deren freies Ende die Ablauföffnung verschließt.

2. Flüssigkeitsfilter nach Anspruch 1, **dadurch gekennzeichnet, daß** die Blattfeder durch eine Schulter oder einen Wulst des Stützkörpers betätigbar ist.

3. Flüssigkeitsfilter nach Anspruch 1, **dadurch gekennzeichnet, daß** der Stützkörper die Blattfeder aufweist, welche die Ablauföffnung verschließt oder öffnet.

4. Flüssigkeitsfilter nach einem der vorherigen Ansprüche, **dadurch gekennzeichnet, daß** das Filterelement ein konzentrisch aufgebautes, aus zick-zack-förmig gefaltetem Filterpapier bestehendes Element ist, welches an den Stirnflächen Endscheiben aufweist und welches auf den Stützkörper aufschiebbar ist.

## Claims

1. Liquid filter, comprising a housing (10), a cover (11) that closes the housing, a filter element (12) that is disposed in the housing and, connected to the cover, a support body (16) for the filter element, wherein the housing includes an inlet opening for the liquid to be filtered, an outlet opening for the filtered liquid and an outlet opening (15) for the liquid, said outlet opening being closed during the normal operation of the filter element and open during the maintenance or the replacement of the filter element, wherein this outlet opening is closed by an element, which is actuatable by the support body for the filter element, wherein the element is a leaf spring (24) that is biased on one side and is produced from spring steel, the outlet opening being closed by the free end of the said leaf spring.

2. Liquid filter according to claim 1, **characterised in that** the leaf spring is actuatable by a shoulder or a bead of the support body.

3. Liquid filter according to claim 1, **characterised in that** the support body includes the leaf spring, which closes or opens the outlet opening.

4. Liquid filter according to one of the preceding claims, **characterised in that** the filter element is a concentrically constructed element, which comprises filter paper folded in a zigzag-shaped manner, includes end discs at the end faces and can be pushed onto the support body.

## Revendications

1. Filtre à liquide, composé d'un boîtier (10), d'un couvercle (11) fermant le boîtier, d'un élément de filtre (12) disposé dans le boîtier et d'un corps de support (16) assemblé au couvercle pour l'élément de filtre, dans lequel le boîtier présente une ouverture d'entrée pour le liquide à purifier, une ouverture d'évacuation pour le liquide purifié, et une ouverture d'évacuation (15) pour le liquide, qui est fermée pendant le fonctionnement normal de l'élément de filtre et qui est ouverte pendant l'entretien ou le remplacement de l'élément de filtre, cette ouverture d'évacuation étant fermée avec un élément qui peut être actionné par le corps de support pour l'élément de filtre, et l'élément étant un ressort à lame (24) en acier à ressorts, encastré d'un côté, dont l'extrémité libre ferme l'ouverture d'évacuation.

2. Filtre à liquide selon la revendication 1,
**caractérisé en ce que**
le ressort à lame peut être actionné par un épaulement ou un bourrelet du corps de support.

3. Filtre à liquide selon la revendication 1,
**caractérisé en ce que**
le corps de support comprend le ressort à lame, qui ferme ou ouvre l'ouverture d'évacuation.

4. Filtre à liquide selon l'une quelconque des revendications précédentes,
**caractérisé en ce que**
l'élément de filtre est un élément de papier filtre plié en zigzag, disposé de façon concentrique, qui présente des disques d'extrémité dans ses faces frontales et qui peut être glissé sur le corps de support.
